# EUROPEAN PATENT APPLICATION

(11) **EP 0 895 972 A1**
(43) Date of publication of application: **10.02.1999**
(21) Application number: 97890159.3
(22) Date of filing: 08.08.1997
(51) Int. Cl.: C04B 28/08

(54) **Alkaline aluminoferrosilicate hydraulic cement**

(71) Applicant: "HOLDERBANK" Financière Glarus AG, 8750 Glarus (CH)
(72) Inventor: Krivenko, Pavel Vasilijevich, Kiev State Techn., Povitroflotskyi pr. 31, 25203 Kiev (UA); Lerat, André Marcel Jean, Ciments d'Obourg S.A., 7034 Obourg (BE); Montani, Serge, "Holderbank"Managmt u.Beratung AG, 5113 Holderbank (CH); Gebauer, Juraj Dr., "Holderbank" Managmt, 5113 Holderbank (CH)
(74) Representative: Haffner, Thomas M., Dr.

(57) **Abstract**

An alkaline aluminoferrosilicate hydraulic cement contains water, calcinated dolomite, portland cement clinker, metallurgical slag selected from nonferrous, blast furnace electrothermophosphorous, reactive silica, and alkali metal compounds. The calcinated dolomite essentially consists of, in % by weight, 50 to 55 CaO and 30 to 35 Mg0 and is obtained by sintering a dolomite CaMg(CO₃)₂ at a temperature of between 800° and 950°C until CaC0₃ and MgC0₃ have undergone full decomposition. The reactive silica is a silica fume, fly ash from coal combustion, amorphous silica or silicic acid. The alkali metal compound is a K, Na or Li compound causing an alkaline reaction in an aqueous medium, or a mixture thereof. A bonding matrix obtained from the blended alkaline aluminoferrosilicate hydraulic cement after mixing with water essentially consists of the molecular formula:

(Li, K, Na)₁₋₈Mg₀₋₃Ca₄₋₁₅[Al₁₋₄Fe²⁺₃₋₀Fe³⁺₂₋₁₆Si₆₋ ₂₄O₁₅₋₅₀](8-15)H₂0

The cement is produced by mixing in a certain sequence all of the components. The cement can be used as a neat cement or with fillers, such as sand, gravel, slags, crushed serpentinite rock to make mortars and concrete, standing out for a high abrasion resistance, good adhesion to metals and protective properties against gamma and neutron radiation.

## Description

### FIELD OF THE INVENTION

The invention relates to an alkaline aluminoferrosilicate cement mixed with water to form neat cement, or with water and aggregates to make mortar and concrete, to be used in today's ordinary and special construction industries.

### BACKGROUND ART

Blended hydraulic cements are widely used in the construction industry. The advantages taken into account during their development, first of all, are great energy savings and the utilization of large-volume by-products, such as granulated blast furnace slags, fly ashes from coal combustion, etc.

Blended cements using granulated blast furnace slags have been found to be most effective since they are identical with ordinary portland cement in terms of their main oxides CaO, Al₂O₃ andSiO₂, yet in different proportions. The latter circumstance has caused the restriction in respect of the content of slags and ashes in the blended cements, because of a decrease of the activity especially at early periods of hardening.

By researches (Glukhovsky et al., U.S. Patent No.4,410,365 issued on Oct.18, 1983) it was found that in order to enhance the activity of blended cements based on metallurgical slags and fly ashes it would be favourable to introduce alkali metal compounds which, due to their high reactivity, would provide high activity, first of all, at initial stages of hardening. Although developed cements have provided high strengths, the quick initial setting presents difficulties and limitations to the user when the binder is put to practical applications.

Further, these investigations have been extended into how to involve a wider range of aluminosilicate raw materials to enhance properties. Such cements are described by Forss, Davidovits (US-A-4 306 912 issued on 22.12.1981, US-A-45 09 985 issued on 9.04.1985). Although these cements have solved the problem of too short an initial setting time, they do not appear to provide satisfactory strength gain and adequate adhesion due to considerable shrinkage deformations during hardening.

Also known in the prior art is a cement described in French Patent Application No. 2 669 918, issued June 5, 1992, which describes a blend of 50 to 90 parts by weight of ordinary portland cement and 10 to 50 % by weight of geopolymer cement. The geopolymer cement is produced from 100 parts by weight of aluminosilicate gel {9[Si₂0₅,Al₂0₂], [Si₂0₅,Al₂(0H)₃}, or 30 to 100 parts by weight of alkaline melilite glass (Ca,Na,K)₂ [(Mg,Fe²⁺,Al,Si)₃0₇ having a particle size of 10 µm, or calcium melilite glass Ca₂[(Mg,Fe²⁺,Al,Si)₃0₇] with the same particle size. The hardening of the geopolymer cement takes place under the condition that the ratio of Al(IV):Al(VI) ≥ 1 and alkaline activation with sodium or potassium disilicate (Na₂,K₂(H₃SiO₄)₂ or calcium disilicate Ca(H₃SiO₄)2 with the formation of the geopolymer of (Ca,Na,K)-poly(sialate-siloxo) of the following formula:

[0.6(Na,K) + 0.2Ca](-Si-O-Al-O-Si-O-), H₂0 m

or

[0.4(Na,K) + 0.3Ca](-Si-O-Al-O-Si-O-), H₂0.

As it follows from an analysis of the initial and final hydration products, the main hydration products formed are calcium hydrosilicate and hydroaluminates, whereas the auxiliary ones- the alkaline and alkaline- earth hydroaluminates. The iron in a form of Fe²⁺ is found in an insignificant quantity (not exceeding 1 % by weight) and does not play a determining role in the formation of phase composition. Thus, the described cement in terms of its composition and main properties may be referred to as a conventional alkaline cementitious system.

Numerous attempts have been made to enhance the properties of blended hydraulic cements. Thus, U.S.Patent No 5,490,889 issued on Feb. 13, 1996 introduced lithium as another and even more effective alkali metal activator in the blended hydraulic cement and pointed out the advantages of using lithium hydroxide and lithium carbonate in order to provide for a rapid strength gaining, etc., though lithium activators had been recognized long before.

Although the developed cement and cement stone have provided some advantages over the conventional blended and alkaline blended cements, such as high strength, good corrosion resistance, frost resistance, properties, such as adhesion, abrasion resistance, protective properties against neutron and gamma radiation present difficulties as well as availability of raw materials.

U.S. Patent No 5,372,640 issued on Dec. 13, 1994 describes a tectoaluminosilicate cement, the bonding matrix of which obtained from the developed cement by treatment with water at a ratio of 3:1 to 6:1 essentially consists of the formula: (Li,Na)₀₋₇ K₁₋₆ Mg₁₋₀, Ca₃₋₀[Al₄Si₆₋₁₄O₂₁₋₃₆] (0-15 H₂0), corresponding to alkaline and alkaline-alkali-earth aluminosilicate and hydroaluminosilicate compounds analogous to natural zeolite, like feldspathoids and plagioclases.

Thus, all of the prior art high-performance cements have failed to provide a composition of material that would allow the cement producer to involve the whole range of materials occurring in nature, although there exist, both in nature and in the form of waste products, large quantities of stable substances of zeolitic structure, namely: aluminoferrosilicates, in which the amphoteric oxide is presented by iron or a combination of iron and aluminium These substances are known to exhibit good adhesion, especially relative to metals, and high temperatures as well as a high albrasion resistance. However, prior art has failed to synthesize a cement stone with such substances using the known technologies since the iron is present, as a rule, in the initial raw materials in its inactive form, such as Fe²⁺. Waste products containing iron in its inactive form may also comprise nonferrous slags disposed of in huge amounts worldwide.

### DISCLOSURE OF THE INVENTION

The following proportions of the components are used to make the alkaline aluminoferrosilicate hydraulic cement for both general and special applications. An alkaline aluminoferrosilicate cement according to the invention essentially consists of: from about 55 to 91.5 percent by weight nonferrous slags, from about O to 7 percent by weight ordinary portland cement clinker, from about O to 35 percent by weight granulated blast furnace slag, from about O to 25 percent by weight electrothermophosphorous slag, from about O to 3 percent by weight calcinated dolomite, from about O to 15 percent by weight active silica, from about 1 to 10 percent by weight metakaolin, from about 2.5 to 15 percent by weight alkaline components.

Any granulated nonferrous slags selected from nickel, lead, copper, corresponding in terms of chemical composition to the polycomponent silicate system CaO-Mg0-FeO-Fe₂0₃₋Al₂0₃-SiO₂ and of which a mineralogical composition is represented, predominantly, by compounds of magnesia- ferric/ferrous pyroxenes and spinels FeO Fe₂0₃, (Fe²⁺Mg) (Fe³⁺, Cr, Al)₂O₃ with glass of a magnesia-ferric/ferrous composition prevailing. Their general feature is a low content of CaO and a high content of FeO as compared to blast furnace slag.

To regulate the cation-exchange and crystallization processes, the CaO-containing component may be used in cement composition in a form of ordinary portland cement, blast furnace or electrothermophosphorous granulated slag or dolomite calcined at 800-950°C. Active silica is introduced in the form of coal combustion fly ashes, silica fume, amorphous silica, silicic acid. Metakaolin is produced by dehydration of kaolinite clay at 700- 800°C. Alkali metal compounds causing an alkaline reaction in an aqueous medium are used as the alkaline components, e.g., LiOH, NaOH, KOH, Na₂CO₃, K₂CO₃, Na(K)₂O(0.5-4) SiO₂ (0-20)H₂0 or their combinations.

As it was mentioned above, a significant feature of the nonferrous slags is the increased content (up to 35 % by weight) of Fe0, which, being in its inactive bivalent form (Fe²⁺) does not allow to produce active hydraulic binders. However, in the presence of the alkaline cations Li+, K+, and Na+ (what is confirmed by nuclear magnetic resonance data) it starts to transform from Fe²⁺ into Fe³⁺. The iron in a trivalent form is found in a six-fold coordination and is capable to exhibit amphoteric properties. In case of an insufficient amount of SiO₂ it exhibits acidic properties and is bound to form ferrites 2CaO Fe₂0₅ 5H₂0 and 3CaO Fe₂0₃ 6H₂0, whereas in the case of abundance of SiO₂- it exhibits basic properties and is bound to form hydrogarnets of the composition: 2CaO FeO Fe₂0₃ 3SiO₂ 2H₂0 and 3CaO Fe₂0₃ 2SiO₂ 2H₂0.

The resultant ferric/ferrous compounds determine high properties of the cement stone produced. Along with main hydration products, the characteristic hydration products of the developed cement are: tobermorite, calcium zeolite, gismondine CaAl₂SiO₈ 4H2O, magnesioriebeckite Na₂Mg₃Fe₂(Si₈O₂₂)(OH)₂, gmelinite (Na₂Ca)OAl₂0₃ 4SiO₂ 6H₂O, that is zeolite-like compounds providing high performance properties of mortars and concretes made from the cement.

The following are given as examples of formulations of the alkaline aluminoferrosilicate cement according to the invention.

### Example 1

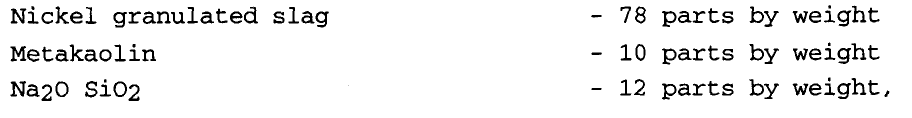

were mixed with 30 parts by weight of water. The slag was ground to an average grain size of less than 43 µm, a sodium metasilicate was dissolved in a mixing water. As it follows from the data of an X-ray phase analysis of the structure of the hardened cement stone after 28 days under normal conditions, besides calcium hydrosilicates of the tobermorite group, weak lines with d=0.302; 0.257; 0.250; 0.213; 0.211 nm are present, which may be referred to as hydrogarnets 3CaOFe₂0₃2SiO₂2H₂0, and after 2 years zeolite-like formations of the gmelinite type (Na₂Ca)OAl₂0₃4SiO₂ 6H₂O with d=0.334; 0.272; 0.250; 0.197 nn and gismondine CaAl₂SiO₈ 4H2O with d = 0.554; 0.467; 0.264; 0.225; 0.19 nm.

The investigations of the cement stone using the existing nuclear magnetic resonance technique (1. Uses of Mössbauer Spectroscopy in Chemistry, Moscow, Mir Publishers, 1970, p.52; 2. Mössbauer Effect. Data Index (compiled by A.A. Vuir Ir., K.I. Ando, H.M. Cooger), 3rd edition, Am. Aviation, 1966) demonstrate that while in the initial nickel slag the ratio of Fe²⁺ to Fe³⁺, as determined by a nuclear magnetic resonance, by ratio of squares of corresponding peaks of resonance absorption tends to infinity, that is, the Fe³⁺-ions were absent, after 28 days of hardening was equal to 1.5, and after 2 years decreased to 0.85.

The chemical composition of nickel granulated slag used was as follows, in % by weight:

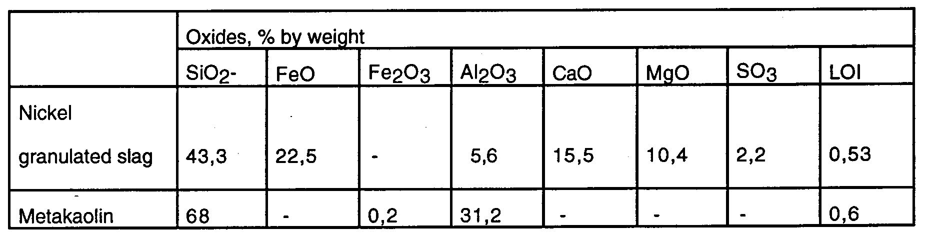

### Example 2

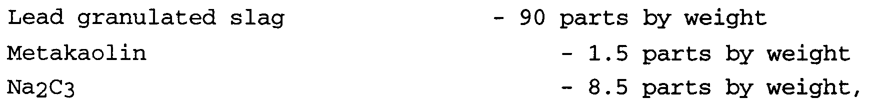

were mixed with 36 parts by weight of water. The procedure of cement preparation was the same as in the previous case.

As it follows from the data of an X-ray phase analysis, the structure of the hardened cement is characteristic of the presence of calcium hydroferrites, the composition of which is determined by the conditions under which the stone hardened: under normal conditions 2CaO FeO Fe₂0₃ 3SiO₂ 2H₂0 and 2CaO Fe₂0₃ 5H₂0, after steam curing at 90±5° C 3CaO Fe₂0₃ 6H₂0 are formed. After 2 years the lines corresponding to hydroferrites become more intensive and the lines appear characteristic of gismondine and gmelinite. Investigations of the cement stone using the existing nuclear magnetic resonance method demonstrate that, while in the initial nickel slag the ratio of Fe²⁺ to Fe³⁺ as determined by nuclear magnetic resonance technique by ratio of squares of corresponding peaks of resonance absorption was found to be 13.3, after 28 days of hardening is was 1.4, and after 2 years no peaks of resonance absorption in the NMR spectrograms corresponding to Fe²⁺ was found.

The following raw materials were used:

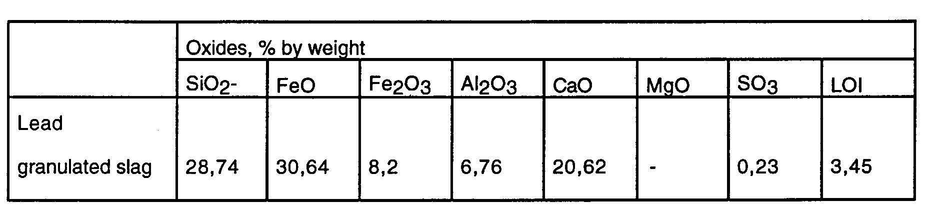

### Example 3

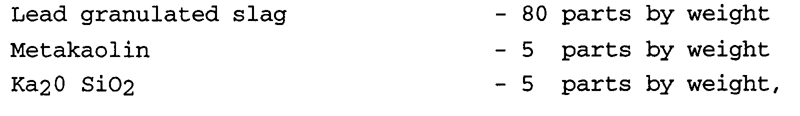

were mixed with 25 parts by weight of water in a Hobart mixer, then 300 weight parts of ISO sand was added and mixed again until the mix appeared to be homogeneously distributed. The sampling procedure was the same as in the previous case. The resultant mortar was placed in molds and allowed to hydrate as prescribed by the European (EN) standards for cement. After 1 day of curing, the samples were demolded and the compression strength was determined. The strength after 1 day was 30.2 MPa, after 2 days 42.5 MPa, after 28 days 85 MPa.

### Example 4

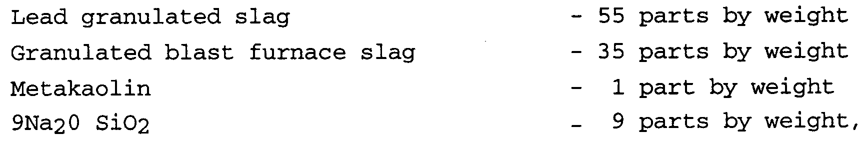

were mixed with 40 parts by weight of water. The blast furnace slag was previously ground to produce particle sizes of less than 43 µm. The sampling procedure is given in detailin Example 3. The initial setting time of the cement was 1 hr, the final setting time 2 hrs. 30 min, the water demand 27 % and the standard strength (after 28 days) 94 MPa.

The chemical composition of the raw materials was as follows:

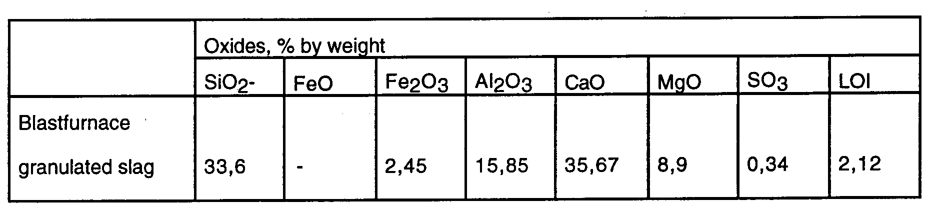

### Example 5

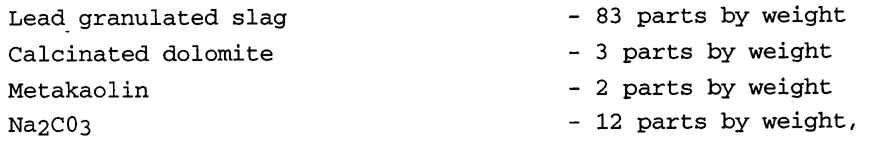

were mixed with 45 parts by weight of water. The dolomite containing, in % by weight, 31.5 % CaO and 20.1 MgO was previously calcinated at 900°C until its full decomposition and ground to produce a fineness of full passing through a sieve with a mesh of 43 µm.

Then 300 weight parts of standard sand were added into a mixer and mixed again until the mix appeared to be homogeneously distributed. The resultant mortar was placed in 7 cm cube molds and allowed to hydrate as prescribed by the European standards for cement of EN series. After the samples had cured, they were demolded and tested for abrasion resistance at various time intervals using an abrasive Beme wheel according to the procedure prescribed by USSR Standard 13087-81. The abrasion resistance measured as a weight loss or quantity of abraded material per m² after 28 days was 2.8 kg/m² and after 180 days was 2.1 kg/m².

### Example 6

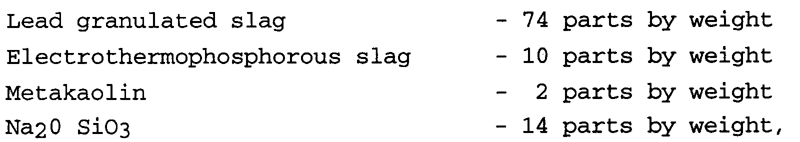

were mixed with 25 parts by weight of water. The sampling and testing procedures were the same as in Example 5. The abrasion resistance after 28 days was 1.2 kg/m², after 180 days was 0.9 kg/m².

The chemical composition of the electrothermophosphorous slag was as follows:

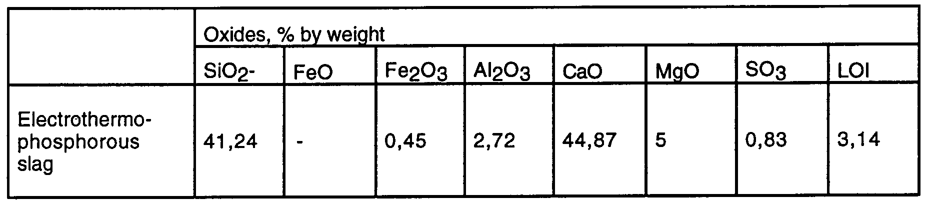

### Example 7

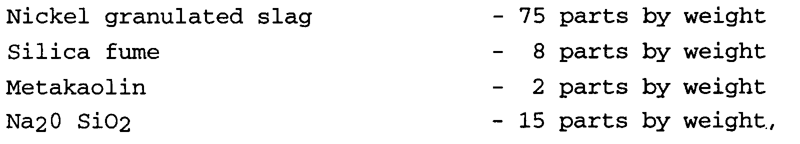

were mixed with 28 parts by weight of water. The sampling and testing procedures were the same as in Example 5. The abrasion resistance after 28 days was 0.9 kg/m², after 180 days was 0.7 kg/m². The silica fume contained 92.5 % by weight of SiO₂.

### Example 8

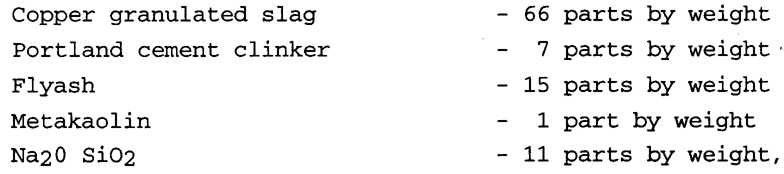

were mixed with 27 parts by weight of water in a Hobart mixer to produce a cement paste. The cement paste was used to glue (layer thickness 3 mm) metallic cylinders of d=15 mm and h=25 mm.

The bond strength after 28 days of hardening under standard conditions was for steel 15.5 MPa, for copper 12.6 MPa, for brass 10.1 MPa, and for aluminium 14.8 MPa.

The following components were used:

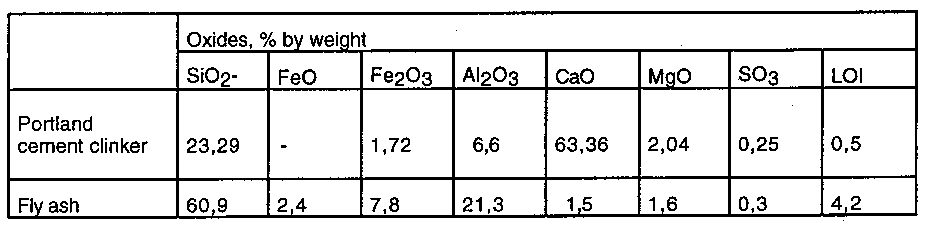

### Example 9

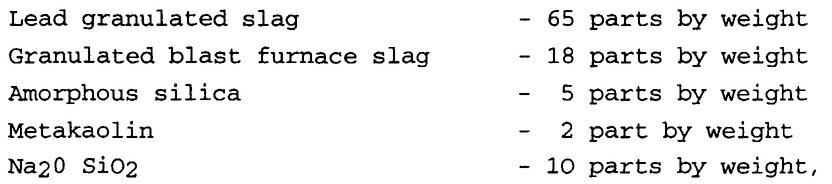

were mixed with 29 parts by weight of water in a Hobart mixer to produce a cement paste. The sampling and testing procedures were as described in Example 8. After 28 days, the bond strength for steel was 12.8 MPa, for copper 11.5 MPa, for brass 8.4 MPa, and for aluminium 11.2 MPa. Amorphous silica contained 95.4 % by weight of SiO₂.

### Example 10

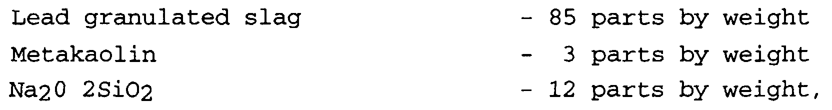

were mixed with 36 parts by weight of water and fine aggregate at a ratio of 1:3 in a Hobart mixer to produce a cement mortar. Non-ground granulated lead slag having a grain size of 0.5-2 mm - 1 part by weight - and a grain size of 2.5-5 mm - 2 parts by weight - was used as a fine aggregate.

The resultant mortar was placed in beam molds (40 cm x 40cm x 160 mm) and cube samples (7cm) and allowed to hydrate as prescribed by the European standards for cement of EN series. After 28 day of curing, the samples were tested for their protective properties by measuring gamma radiation with a radient energy Eγ = 0.661 MeV on a γ-scintillation device according to a procedure described in l.Egorov Yu.A. A Scintillation Method of Spectroscopy of Gamma Radiation and Fast Neutrons, Moscow, Gosatomizdat Publish., 1963. 2. Hughe D., Schwapis R. Neutron Cross Section BNL325, 1958). The adsorption of fast neutrons was also measured using a 120 cm cyclotrone. A stream of neutrons was produced in the reaction D(d, n)³ He at an energy of bombarding neutrons Eₙ = 13.6 MeV and pressure of deuterium in a gas target of 2 - 4 atm. The testing procedure is described in a book: Abramov A.I., Kazanskiy Yu.A., Matusevitch E.S. Bases of Experimental Methods in Nuclear Physics, Moscow, Atomizdat Publish., 1957.

The measurements taken demonstrate a volumetric density of the samples of 3090 kg/m³ and a compressive strength of 110 MPa, a thickness of a half-value layer for the gamma radiation of 3.2 cm, and for the neutron radiation 5.2 cm.

### Example 11

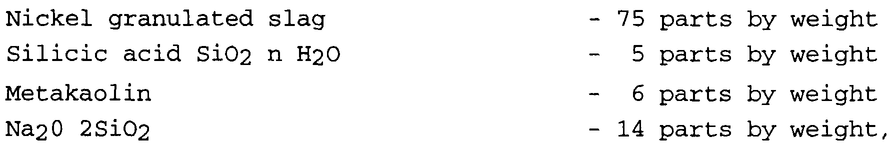

were mixed with 53 parts by weight of water and fine and coarse aggregates at a ratio of 1:3.5:1.5. Non-ground granulated lead slag of Example 10 and crushed serpentinite stone of fraction 5 to 10 mm were used as fine and coarse aggregates, respectively. The sampling and testing procedures were as described in Exampie 10. The measurements taken demonstrate a volumetric density of the concrete samples of 2950 kg/m3 and a compressive strength of 86.9 MPa, a thickness of the half-value layer for the gamma radiation of 3.4 cm and for the neutron radiation of 4.9 cm. The silicic acid contained 75 % by weight of SiO₂.

### Example 12

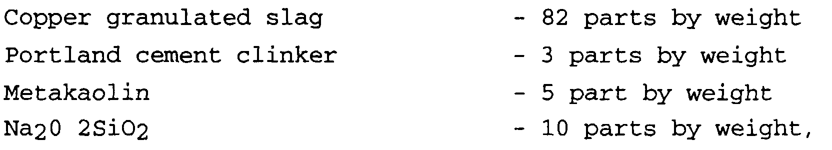

were mixed with 48 parts by weight of water and fine and coarse aggregates at a ratio of 1:2:4.5. Non-ground granulated lead slag and crushed serpentinite stone of Example 11 were used as fine and coarse aggregates, respectively. The sampling and testing procedures were as described in Example 10. The measurements taken demonstrate a volumetric density of the concrete samples of 2980 kg/m3 and a compressive strength of 72 MPa, a thickness of the half-value layer for the gamma radiation of 3.5 cm and for the neutron radiation of 4.5 cm.

## Claims

1. An alkaline aluminoferrosilicate cement, characterized in that it consists essentially of: from about 55 to 91.5 percent by weight nonferrous slags, from about O to 7 percent by weight ordinary portland cement clinker, from about O to 35 percent by weight granulated blast furnace slag, from about O to 25 percent by weight electrothermophosphorous slag, from about O to 3 percent by weight calcinated dolomite, from about O to 15 percent by weight active silica, from about 1 to 10 percent by weight metakaolin, from about 2.5 to 15 percent by weight alkaline components.

2. An alkaline aluminoferrosilicate cement according to claim 1, wherein the total ratio of Fe²⁺ + Fe³⁺ to Al is larger than, or equal to, 1.25.

3. An alkaline aluminoferrosilicate cement according to claim 1 or 2, wherein the granulated nonferrous slags are used at ratios of the main oxides CaO+MgO+Al₂O₃+Fe₂0₃+0.5FeO/SiO₂+0.5 FeO, taken in % by weight, within the range of 0.7 to 1.2.

4. An alkaline aluminoferrosilicate cement according to claim 1, 2 or 3, wherein the active silica is selected from the group consisting of silica fume, amorphous silica, silicic acid, fly ash, metakaolin with a total content of SiO₂ not less than 60 % by weight.

5. An alkaline aluminoferrosilicate cement according to any of claims 1 to 4, wherein the blast furnace and electrothermophosphorous granulated slags at a ratio of oxides CaO + MgO/Al₂O₃+ SiO_{2,} taken in % by weight, is larger than, or equal to, 0.75 are to be used.

6. An alkaline aluminoferrosilicate cement according to any of claims 1 to 5, wherein the alkaline component is selected from the group of alkali metal compounds causing an alkaline reaction in an aqueous medium, i.e., Me0H, Me₂C0₃, Me0nSiO₂ mH₂O, where Me-Li, K, Na and n = 0.5-4, m = 0-20.

7. A bonding matrix derived from the alkaline aluminoferrosilicate cement according to any of claims 1 to 6 in a reaction of aluminoferrosilicate cement with water at a ratio of from 2.2:1 to 4:1, consisting essentially of the molecular formula
(Li, K, Na)₁₋₈Mg₀₋₃Ca₄₋₁₅[Al₁₋₄Fe²⁺₃₋₀Fe³⁺₂₋₁₆Si₆₋ ₂₄O₁₅₋₅₀](8-15)H₂0

8. A bonding matrix according to claim 7, which exhibits an adhesion to steel of ≥ 4.2 MPa, to copper of ≥ 3.5 MPa, to brass of ≥ 2.4 MPa, and to aluminium of ≥ 3.5 MPa.

9. A concrete with a bonding matrix according to any of claims 7 or 8 and standard aggregates with a bonding matrix to standard aggregate ratio of 1:2 to 1:6.5, which exhibits an abrasion resistance, measured using an abrasion wheel of Beme after 440 rotations of the specimens hardened for 28 days under standard conditions, of less than 2.8 kg/m², of the specimens hardened for 180 days of less than 2.1 kg/m².

10. A concrete with a bonding matrix according to any of claims 7 or 8 and lead slag as fine aggregate with a bonding matrix to standard aggregate ratio of 1:2 to 1:4 at a volumetric density of more than 3000 kg/m³ and a compressive strength larger than 110 MPa, which exhibits a thickness of the half-value layer for the gamma radiation of ≥ 3.2 cm.

11. A concrete with a bonding matrix according to any of claims 7 or 8 and lead slag and crushed serpentinite rock as fine and coarse aggregates with a bonding matrix to fine and coarse aggregate ratio from 1:3.5:1.5 to 1:2.4.5 at a volumetric density of more than 2950 kg/m³ and a compressive strength larger than 72 MPa, which exhibits a thickness of the half-value layer for the neutron radiation of ≤ 4.9 cm.
